# EUROPÄISCHE PATENTANMELDUNG

(11) **EP 4 682 666 A1**
(43) Veröffentlichungstag der Anmeldung: **21.01.2026**
(21) Anmeldenummer: 25190238.3
(22) Anmeldetag: 17.07.2025
(51) Int. Cl.: G05D 23/19, F24D 19/10

(54) **HEIZKÖRPERTHERMOSTAT, HEIZUNGSSYSTEM UND STEUERUNGSVERFAHREN**

(30) Priorität: 18.07.2024 DE 102024120325
(71) Anmelder: Efficient Residential Heating GmbH, 81379 München (DE)
(72) Erfinder: ORTMANN, Markus, 85607 Zorneding (DE); EBBERS, Mirko, 42329 Wuppertal (DE); KRAMER, Matthias, 81245 München (DE); SLOOTEN, Stefan, 44149 Dortmund (DE)
(74) Vertreter: Thum & Partner I Thum Mötsch Weickert Patentanwälte PartG mbB

(57) **Zusammenfassung**

Die Erfindung betrifft ein Heizkörperthermostat (10) für ein mit einem Wärmemedium durchströmtes Heizkörperventil, mit einem Gehäuse (11), in welchem ein Stellantrieb (12) zum Öffnen und Schließen des Heizkörperventils und eine Leiterplatte (13) angeordnet sind, wobei die Leiterplatte (13) einen Prozessor (14) zur Steuerung des Stellantriebs (12), wenigstens einen Temperatursensor zur Erfassung einer Umgebungstemperatur und eine Radareinheit (15) zur Erfassung einer Raumgeometrie und/oder zur Erfassung von Lebewesen in einem Raum umfasst. Vorzugsweise ist innerhalb des Gehäuses (11) eine Einrichtung zur Erzeugung von elektrischer Energie aus einer Temperaturdifferenz zwischen dem Wärmemedium und der Umgebung angeordnet. Ferner betrifft die Erfindung ein Heizungssystem und ein Steuerungsverfahren.

## Beschreibung

Die Erfindung betrifft ein Heizkörperthermostat, ein Heizungssystem und ein Steuerungsverfahren.

Heizkörperthermostate sind aus der Praxis bekannt und dienen dazu, die Stellung eines Heizkörperventils an die jeweils eingestellte Temperatur anzupassen. Elektronisch gesteuerte Heizkörperventile nutzen dazu wenigstens einen Temperatursensor, der die Umgebungstemperatur erfasst und Grundlage für die Steuerung des Heizkörperventils bildet.

Einige bekannte Heizkörperthermostate nutzen zusätzlich zu einem Temperatursensor weitere Sensoren, um die Anwesenheit von Personen im Raum zu ermitteln. Auf diese Weise kann die Steuerung des Heizkörperventils abhängig von der Belegung des Raums mit Personen gesteuert werden. Beispielsweise kann die Temperatur reduziert werden, wenn sich keine Personen im Raum befinden. EP 3 318 948 B1 stellt dazu ein Heizkörperthermostat vor, das als weiteren Sensor einen passiven Infrarotsensor aufweist. EP 3 455 644 A1 und EP 4 204 919 A1 zeigen Heizkörperthermostate mit jeweils einem den Temperatursensor ergänzenden Radarsensor.

Die bekannten Heizkörperthermostate haben mehrere Nachteile. So lässt sich ein passiver Infrarotsensor nicht gut und ästhetisch in ein Produktdesign eines Heizkörperthermostats einbinden. Außerdem besteht die Gefahr von Fehlmessungen durch unmittelbar in der Nähe des Heizkörperthermostats wabernde Wärme des jeweils zugeordneten Heizkörpers. Um die zusätzlichen Sensoren, insbesondere Radarsensoren, mit Energie zu versorgen, weisen bekannte Heizkörperthermostate meist Batterien auf, die in regelmäßigen Abständen ausgetauscht werden müssen. Das ist aufwändig und erfordert nach dem Batterietausch oft eine Neukalibrierung des Heizkörperthermostats. Alternativ können die Heizkörperthermostate auch ein einen elektrischen Hausstromkreis angeschlossen werden. Dies erfordert jedoch eine entsprechende Vorausplanung beim Hausbau oder eine nachträgliche Anpassung des Stromverteilnetzes im Gebäude, was aufwändig und oft nicht besonders ästhetisch umsetzbar ist.

Die Aufgabe der Erfindung besteht darin, ein kompaktes Heizkörperthermostat anzugeben, das eine energieautarke, automatisierte Temperaturregelung ermöglicht. Ferner ist es Aufgabe der Erfindung, ein Heizungssystem und ein Steuerungsverfahren anzugeben.

Erfindungsgemäß wird diese Aufgabe im Hinblick auf das Heizkörperthermostat durch den Gegenstand des Patentanspruchs 1, im Hinblick auf das Heizungssystem durch den Gegenstand des Patentanspruchs 18 und im Hinblick auf das Steuerungsverfahren durch den Gegenstand des Patentanspruchs 19 gelöst.

So beruht die Erfindung auf dem Gedanken, ein Heizkörperthermostat für ein mit einem Wärmemedium durchströmtes Heizkörperventil anzugeben, wobei das Heizkörperthermostat ein Gehäuse aufweist, in welchem ein Stellantrieb zum Öffnen und Schließen des Heizkörperventils und eine Leiterplatte angeordnet sind. Die Leiterplatte umfasst einen Prozessor zur Steuerung des Stellantriebs, wenigstens einen Temperatursensor zur Erfassung einer Umgebungstemperatur und eine Radareinheit zur Erfassung einer Raumgeometrie und/oder zur Erfassung von Lebewesen in einem Raum.

Das erfindungsgemäße Heizkörperthermostat vereint innerhalb seines Gehäuses auf kompaktem Raum die wesentlichen Komponenten, um eine automatische Steuerung der Raumtemperatur zu erzielen. Die Temperatursensoren erfassen dazu die Umgebungstemperatur. Da diese aufgrund der Nähe zum Heizkörper oft verfälscht ist, können zusätzlich Daten der Radareinheit genutzt werden, um die erfasste Umgebungstemperatur anhand der durch die Radareinheit ermittelten Raumgeometrie und/oder der durch die Radareinheit erfassten Lebewesen zu kalibrieren. So ist eine besonders exakte Einstellung einer Zieltemperatur erreichbar.

Das Wärmemedium, welches das Heizkörperventil durchströmt, kann eine Heizkörperflüssigkeit sein. Es ist auch möglich, dass das Wärmemedium zumindest teilweise durch Dampf gebildet ist.

Innerhalb des Gehäuses kann ferner eine Einrichtung zur Erzeugung von elektrischer Energie aus einer Temperaturdifferenz zwischen dem Wärmemedium und der Umgebung angeordnet sein. Alternativ oder zusätzlich kann das Gehäuse eine Einrichtung zur Erzeugung von Energie aus Lichtstrahlung, insbesondere ein Photovoltaikmodul, tragen.

Der Vorteil einer solchen Einrichtung zur Erzeugung von elektrischer Energie besteht darin, dass das Heizkörperthermostat im Wesentlichen energieautark ist. Dazu kann als Energiequelle die Einrichtung zur Erzeugung von elektrischer Energie aus einer Temperaturdifferenz zwischen dem Wärmemedium und der Umgebung und/oder die Einrichtung zur Erzeugung von Energie aus Lichtstrahlung genutzt werden. Weitere Möglichkeiten sind Einrichtungen zur Energieerzeugung aus mechanischer Bewegung, beispielsweise aus Vibrationen, die sich durch Bewegung des Wärmemediums im Heizungskreislauf ergeben. Die zuvor genannten Einrichtungen zur Energieerzeugung folgen dem Prinzip des "Energy Harvesting". So kann auf den Wechsel einer Batterie oder den Anschluss des Heizkörperthermostats an ein Stromnetz verzichtet werden. Das erleichtert die Bedienung und stellt eine dauerhafte Funktionsfähigkeit des Heizkörperthermostats sicher.

Es ist auch möglich, eine integrierte wiederaufladbare Batterie im Heizkörperthermostat vorzusehen, die mittels kabelgebundener oder induktiver Energieübertragung, beispielsweise durch ein Ladegerät, periodisch mit elektrischer Energie versorgt wird. Das Ladegerät kann direkt mit einem Stromnetz verbindbar sein und/oder eine integrierte wieder aufladbare Batterie (Powerbank) aufweisen. Das Ladegerät kann zur Energieübertragung über ein Kabel oder induktiv an das Heizkörperthermostat gekoppelt werden.

Neben dem Temperatursensor und der Radareinheit können weitere Sensoren im Heizkörperthermostat angeordnet sein. Es ist insbesondere möglich, dass zwei oder mehr Temperatursensoren vorgesehen sind, die beispielsweise unterschiedliche Temperaturen erfassen. So kann ein Temperatursensor zur Erfassung der Umgebungstemperatur dienen und ein weiterer Temperatursensor die Temperatur des Wärmemediums ermitteln. Alternativ oder zusätzlich kann ein weiterer Temperatursensor auch die Gehäusetemperatur des Heizkörperthermostats ermitteln.

Ferner können weitere Umgebungssensoren vorgesehen sein. Beispielsweise können weitere Umgebungsdaten durch wenigstens einen Schalldrucksensor, wenigstens einen akustischen Feedbacksensor, wenigstens einen Luftdrucksensor und/oder wenigstens einen Luftfeuchtigkeitssensor erfasst werden. Die vorgenannten Sensoren und/oder ein zusätzlicher Temperatursensor können im Gehäuse des Heizkörperthermostats oder entfernt von dem Heizkörperthermostat im Raum angeordnet sein. Bei einer vom Heizkörperthermostat entfernten Installation ist der jeweilige Sensor jedoch mit dem Heizkörperthermostat signalverbunden, beispielsweise über eine Funkverbindung.

Mittels eines Schalldrucksensors oder eines akustischen Feedbacksensors kann ebenfalls die Anwesenheit von Lebewesen, insbesondere Personen, im Raum erfasst werden. Diese können als Zusatz zum Radarsensor die Genauigkeit der Erfassung von Lebewesen erhöhen. Über einen Luftdruck- und/oder Luftfeuchtigkeitssensor kann das Raumklima durch entsprechende Heizungssteuerung verbessert werden. Auch eine Durchschnittsraumtemperatur, die über die Mittelung der Daten eines Temperatursensors über einen vorbestimmten Zeitraum erfasst wird, kann für die Steuerung des Heizkörperthermostats herangezogen werden.

Das Heizkörperthermostat weist vorzugsweise eine Mensch-Maschine-Schnittstelle zur Eingabe von Nutzerdaten (Nutzereingabedaten) auf. Diese Mensch-Maschine-Schnittstelle kann beispielsweise ein Drehrad sein, über welches eine Zieltemperatur vorgeben werden kann. Alternativ oder zusätzlich können Nutzereingabedaten auch mittels einer mit dem Heizkörperthermostat verbundenen Softwareapplikation, beispielweise einer Smartphone-App, vorgegeben werden. Die Verbindung zwischen dem Heizkörperthermostat und der Softwareapplikation kann über eine Funkverbindung, insbesondere eine Funknetzwerkverbindung, erfolgen. Das Funknetzwerk kann ein Gateway aufweisen, das mit einem Cloud-Service verbunden ist.

Aus den Nutzereingabedaten sowie Temperatur- und/oder weitere Umgebungsdaten, die von den zuvor genannten Sensoren an den Prozessor des Heizkörperthermostats gesendet werden, kann der Prozessor Steuerungsdaten generieren, die dann zur Steuerung des Stellantriebs dienen. Über die Steuerung des Stellantriebs wird die Ventilstellung des Heizkörperventils angepasst und so die Temperatur im Raum geregelt.

Um eine besonders gute Energieeffizienz bei der Erzeugung von elektrischer Energie aus der Temperaturdifferenz zwischen dem Wärmemedium und der Umgebung zu erzielen, hat es sich als besonders vorteilhaft erwiesen, wenn das Gehäuse des Heizkörperthermostats ein Metall umfasst oder daraus besteht. Aufgrund der guten Wärmeleitfähigkeit ist insbesondere eine Aluminiumlegierung als Gehäusematerial geeignet. Das Gehäuse kann also eine Aluminiumlegierung umfassen oder vollständig daraus bestehen. Das schließt nicht aus, dass das Gehäuse zumindest auf einer Außenseite mit einer Lackierung oder anderweitigen Beschichtung versehen ist. Temperaturbeständige und wenig temperaturisolierende Beschichtungen sind dabei von Vorteil. Die Beschichtung kann eine Korrosionsschutzfunktion und/oder eine ästhetische Funktion haben.

Bei einer bevorzugten Ausführungsform der Erfindung weist die Radareinheit einen Radarprozessor und wenigstens eine Sende- und/oder Empfangseinrichtung, insbesondere wenigstens eine Radarantenne, auf. Die wenigstens eine Radarantenne kann als Richtantenne, insbesondere logarithmische Richtantenne, ausgebildet sein. Bevorzugt ist es, wenn die Radareinheit zwei logarithmische Richtantennen umfasst. Die kompakte Gestaltung des Heizkörperthermostats wird weiter gefördert, wenn die Radareinheit, insbesondere der Radarprozessor, auf der Leiterplatte angeordnet ist. Jedenfalls kann die Radareinheit vollständig innerhalb des Gehäuses des Heizkörperthermostats angeordnet sein. Das trägt insbesondere zum ästhetischen Gesamterscheinungsbild des Heizkörperthermostats bei.

Eine weitere bevorzugte Ausführungsform der Erfindung sieht vor, dass die Radareinheit zur Erzeugung gepulster Radarsignale angepasst ist. Die gepulsten Radarsignale können insbesondere gepulste Doppler-Radarsignale sein. Die Nutzung eines gepulsten Radarsignals reduziert den Energiebedarf der Radareinheit. Die Effizienz des Heizkörperthermostats wird damit gesteigert. Insbesondere trägt die Nutzung eines gepulsten Radarsignals dem Umstand Rechnung, dass die Energieversorgung vorzugsweise über Energy Harvesting, also die Einrichtung zur Erzeugung von elektrischer Energie aus einer Temperaturdifferenz zwischen dem Wärmemedium und der Umgebung, erfolgt. So kann die Radareinheit auch sicher betrieben werden, wenn eine geringe Temperaturdifferenz vorliegt, beispielsweise bei hoher Sonneneinstrahlung im Sommer. Dabei kann insbesondere vorgesehen sein, dass die Radareinheit gezielt nur für die Aufnahme einer Messung aktiviert wird, wobei der gesamte Energiebedarf der Radareinheit während der Messung aufgrund des gepulsten Betriebs limitiert ist.

Die Radareinheit kann insbesondere angepasst sein, um ein Radarsignal mit einer Frequenz von größer als 20 GHz zu erzeugen. Vorteilhaft ist es, wenn das Radarsignal eine Frequenz von 70 GHz nicht überschreitet. Vorteilhaft sind insbesondere Frequenzen zwischen 20 GHz und 70 GHz, insbesondere 64 GHz, oder zwischen 20 GHz und 60 GHz, insbesondere zwischen 20 GHz und 45 GHz, insbesondere zwischen 20 GHz und 30 GHz, vorzugsweise 24 GHz. Es hat sich gezeigt, dass Frequenzen unterhalb von 70 GHz gut geeignet sind, um auch Mobiliar zu durchdringen. Gleichzeitig ist es durch derartige Radarsignale möglich, einfache Filter auf der Leiterplatte einzusetzen, wodurch sich die Herstellungskosten für das Heizkörperthermostat reduzieren.

Besonders bevorzugt ist ein Radarsignal in einem Frequenzband zwischen 22 GHz und 26 GHz, insbesondere zwischen 23 GHz und 25 GHz, insbesondere zwischen 23,5 GHz und 24,5 GHz, vorzugsweise 24 GHz. Die Nutzung einer Radareinheit mit den angegebenen Frequenzen hat den Vorteil, dass Standardkomponenten für die Leiterplatte genutzt werden können. Das reduziert die Kosten für das Heizkörperthermostat.

Bei einer weiteren bevorzugten Variante des erfindungsgemäßen Heizkörperthermostats kann die Sende- und/oder Empfangseinheit so angepasst sein, dass ein gerichtetes Radarsignal erzeugbar ist. Dabei kann besonders bevorzugt vorgesehen sein, dass das Radarsignal zur Abtastung der Umgebung räumlich steuerbar ist. Beispielsweise können mehrere gerichtete Radarantennen vorgesehen sein, die in unterschiedliche Richtungen ausgerichtet sind. Die Sende- und/oder Empfangseinheit kann so konfiguriert sein, dass sie Radarsignale alternativ zu unterschiedlichen Radarrichtantennen sendet und von dort empfängt. Auf diese Weise kann im Rahmen eines Phased-array-Radars eine gezielte Abtastung der Umgebung ermöglicht werden. Die Präzision bei der Erfassung der Raumgeometrie und/oder der Erfassung von Lebewesen im Raum wird somit verbessert.

Generell kann vorgesehen sein, dass auf der Leiterplatte angeordnete Prozessor konfiguriert ist, um anhand von Daten der Radareinheit Raumdaten eines das Heizkörperthermostat umgebenden Raums zu ermitteln. Die Raumdaten können insbesondere eine Größe und/oder Form des Raumes umfassen. Insbesondere kann der Prozessor konfiguriert sein, um einen dreidimensionalen, virtuellen Zwilling des das Heizkörperthermostat umgebenden Raums zu ermitteln. Auf Grundlage dieser Raumdaten, insbesondere des virtuellen Zwillings, können dann die mittels des wenigstens einen Temperatursensors erfassten Temperaturen kalibriert werden. Insofern ist es besonders bevorzugt, wenn der Prozessor konfiguriert ist, die mittels des Temperatursensors ermittelte Umgebungstemperatur anhand der Raumdaten zu kalibrieren. Dies ermöglicht eine hochpräzise Temperatursteuerung.

Die Effizienzsteigerung bei der Einstellung der Zieltemperatur im Zusammenhang mit der Erfassung von weiteren Umgebungsparametern, wie der Anwesenheit von Lebewesen im Raum, trägt wesentlich dazu bei, Heizenergie in Gebäuden einzusparen. Durch die Automatisierung der Heizungssteuerung wird Heizenergie vom Heizkörperventil nur dann angefordert, wenn diese auch benötigt wird. Bei herkömmlichen Heizkörperthermostaten ist der Bezug von Heizenergie abhängig davon, dass ein Nutzer das Heizkörperthermostat bedient. Diese Bedienung, die fehleranfällig ist, kann durch die Automatisierung mittels Sensorik vermieden werden. Vielmehr erfolgt vorzugsweise eine kontinuierliche, sensorgesteuerte Anpassung der Heizenergieanforderung an den Heizenergiebedarf. In einem Heizungssystem mit mehreren erfindungsgemäßen Heizkörperthermostaten wird so der Gesamtbedarf an Heizungsenergie insgesamt optimiert, insbesondere reduziert, was für die Energieeffizienz in Bestandsgebäuden von entscheidender Bedeutung ist.

Bei dem erfindungsgemäßen Heizkörperthermostat ist vorzugsweise die Einrichtung zur Erzeugung elektrischer Energie mit dem Stellantrieb und/oder der Leiterplatte elektrisch gekoppelt. Über die Leiterplatte kann außerdem die Radareinheit mit elektrischer Energie von der Einrichtung zur Erzeugung elektrischer Energie versorgt werden. Bevorzugt ist es insbesondere, wenn alle elektrischen und elektrischen Komponenten des Heizkörperthermostats ausschließlich über die Einrichtung zur Erzeugung elektrischer Energie mit elektrischer Energie versorgt werden.

Um Energieschwankungen bei der Erzeugung elektrischer Energie aus der Temperaturdifferenz zwischen dem Wärmemedium und der Umgebung zu kompensieren, ist bevorzugt vorgesehen, dass die Einrichtung zur Erzeugung elektrischer Energie einen Energiepufferspeicher, insbesondere eine wiederaufladbare Batterie, aufweist. Eine derartige wiederaufladbare Batterie kann insbesondere ein Lithium-Ionen-Akkumulator sein. Der Energiepufferspeicher kann insbesondere auf der Leiterplatte angeordnet sein.

Ferner kann die Leiterplatte ein Funkmodul tragen. Das Funkmodul kann vorzugsweise ein LoRaWAN-Modul sein. Das Funkmodul ist insofern vorzugsweise angepasst, um Funksignale über ein Long Range Wide Area Network (LoRaWAN) zu senden und empfangen. Das Long Range Wide Area Network nutzt dazu vorzugsweise ein Low-Power-Wireless-Netzwerkprotokoll. Auf diese Weise kann mit geringem Energieaufwand eine Funkkommunikation zwischen mehreren Heizkörperthermostaten hergestellt werden. Die Funkkommunikation kann über ein Funknetzwerk erfolgen. Das Funknetzwerk kann insbesondere ein Gateway umfassen, das mit den Heizkörperthermostaten funkverbunden ist. Das Gateway kann mit einer Steuerungs-Cloud verbunden sein. Die Funkkommunikation zwischen den Heizkörperthermostaten ermöglicht den Abgleich von Heizanforderungen innerhalb eines Raumes oder über mehrere Räume hinweg. Insbesondere innerhalb eines Raumes ist eine Funkkommunikation zwischen Heizkörperthermostaten vorteilhaft, um eine energieeffiziente Heizkörperanforderung, insbesondere auch unter Berücksichtigung von Raumdaten, sicherzustellen.

Bei einer bevorzugten Ausführungsform des Heizkörperthermostats kann die Leiterplatte ein Anzeigeelement tragen. Vorzugsweise ist das Anzeigeelement auf einer der

Radareinheit gegenüberliegenden Seite der Leiterplatte angeordnet. Insbesondere kann die Leiterplatte eine ins Innere des Gehäuses ausgerichtete Innenseite umfassen, auf welcher die Elektronikkomponenten einschließlich der Radareinheit angeordnet sind. Auf einer gegenüberliegenden, dem Gehäuse zugewandten Außenseite der Leiterplatte kann das Anzeigeelement positioniert sein. Diese Anordnung optimiert den Raumbedarf der Leiterplatte im Gehäuse des Heizkörperthermostats.

Das Anzeigeelement ermöglicht eine flexible Anzeigemöglichkeit, so dass kontextabhängige Informationen angezeigt werden können. Solche kontextabhängigen Informationen können beispielsweise die aktuelle Raumtemperatur, Verhaltensinformationen des Thermostats und/oder Informationen über den Verbindungsstatus der Funkverbindung des Heizkörperthermostats sein. Es ist auch möglich, dass Installationshinweise angezeigt werden. Beispielsweise kann das Anzeigeelement zeitweise einen QR-Code darstellen, um die Einrichtung eines Funkverbindungsnetzwerks zu erleichtern.

Das Anzeigeelement kann eine integrierte wiederaufladbare Batterie aufweisen oder die wiederaufladbare Batterie nutzen, die auf der Leiterplatte angeordnet ist. Generell ist vorteilhaft vorgesehen, das Anzeigeelement auf der Leiterplatte zu befestigen. Alternativ ist es auch möglich, das Anzeigeelement am Gehäuse zu fixieren oder in das Gehäuse zu integrieren. Sofern das Anzeigeelement auf der Leiterplatte angeordnet ist, ist es bevorzugt, wenn das Gehäuse eine transparente Abdeckung aufweist, durch welche das Anzeigeelement sichtbar ist. Die Abdeckung ist vorzugsweise so gestaltet, dass sie das Anzeigeelement vor Verschmutzung schützt und das Eindringen von Feuchtigkeit in das Gehäuse verhindert.

Besonders bevorzugt ist die Verwendung eines ePaper-Displays als Anzeigeelement. ePaper-Displays haben einen sehr geringen Energiebedarf, da Energie nur benötigt wird, wenn eine Änderung der Anzeige erfolgt. Dies ist in Verbindung mit dem Prinzip des Energy Harvesting von besonderem Vorteil. Durch die Verwendung eines ePaper-Displays bzw. E-Ink-Displays wird also eine hohe Energieeffizienz erreicht, was insbesondere bei einem begrenzten Energiebudget des Heizkörperthermostats durch die Verwendung von Energy Harvesting vorteilhaft ist. Gleichzeitig ermöglicht ein ePaper-Display eine dauerhafte Anzeigemöglichkeit ohne Verwendung einer elektrischen Erhaltungsspannung. Überdies muss das ePaper-Display nicht aus einem Energiesparzustand bzw. abgeschalteten Zustand erweckt werden. Ein weiterer Vorteil der Verwendung eines ePaper-Displays besteht darin, dass dieses auch unter üblichen Raumlichtbedingungen gut ablesbar ist.

Bei dem erfindungsgemäßen Heizkörperthermostat kann außerdem bevorzugt vorgesehen sein, dass das Gehäuse eine Schnittstelle, insbesondere eine Schraubenmutter und/oder einen Klickverbinder, zur lösbaren Verbindung des Heizkörperthermostats mit einem Heizkörperventil aufweist. Vorzugsweise werden verschiedene Heizkörperthermostate angeboten, die für die unterschiedlichen Heizkörperventile unterschiedlicher Hersteller angepasst sind. Einige Heizkörperventilhersteller verwenden Gewinde zur Verbindung von Heizkörperthermostaten mit dem Heizkörperventil. Hierfür eignet sich also ein Heizkörperventil mit einer Schnittstelle, die als Schraubenmutter ausgebildet ist. Andere Hersteller nutzen Klick- bzw. Schnappverbindungen zwischen Heizkörperventil und Heizkörperthermostat, so dass in einem solchen Fall das Heizkörperthermostat vorzugsweise eine Klickverbindungsschnittstelle umfasst. So kann das Heizkörperthermostat universell für unterschiedliche Heizkörperventile genutzt werden. Das erleichtert die Nachrüstung von Bestandsgebäuden mit dem erfindungsgemäßen Heizkörperthermostat.

Ein nebengeordneter Aspekt der Erfindung betrifft ein Heizungssystem eines Mehrparteienhauses mit mehreren Heizkörpern, die jeweils ein Heizkörperventil aufweisen. Dabei ist an wenigstens zwei Heizkörperventilen jeweils ein zuvor beschriebenes Heizkörperthermostat so befestigt, dass das Heizkörperventil über das Heizkörperthermostat, insbesondere direkt, steuerbar ist. Dabei können Heizkörperthermostate mit unterschiedlichen Schnittstellen eingesetzt werden, falls in dem Heizungssystem Heizkörperventile verschiedener Hersteller vorhanden sind.

Der Vorteil des erfindungsgemäßen Heizungssystems besteht darin, dass durch eine Funkverbindung zwischen den Heizkörperthermostaten eine besonders effiziente Anforderung von Heizenergie ermöglicht ist. So kann Heizenergie im gesamten Mehrparteienhaus besonders effizient verteilt und so der Gesamtheizbedarf des Mehrparteienhauses erheblich gesenkt werden. Im Zuge der Steigerung von Heizeffizienz in Bestandsgebäuden wird auf diese Weise eine erhebliche Verbesserung erreicht. Insbesondere kann durch eine vergleichsweise einfache Maßnahme mit geringem Installationsaufwand, nämlich den Austausch von bestehenden Heizkörperthermostaten durch erfindungsgemäßen Heizkörperthermostate, ein Heizungssystem in einem Bestandsgebäude etabliert werden, das gegenüber bisherigen Heizungssystemen eine erheblich gesteigerte Energieeffizienz aufweist. Es hat sich gezeigt, dass über ein Mehrparteienhaus durch das erfindungsgemäße Heizungssystem eine Reduktion des Heizenergiebedarfs von etwa 20 % erreicht werden kann.

Ein weiterer nebengeordneter Aspekt der Erfindung betrifft ein Verfahren zur Steuerung eines mit einem Wärmemedium durchströmten Heizkörperventils mittels eines Heizkörperthermostats, insbesondere eines zuvor beschriebenen Heizkörperthermostats. Das erfindungsgemäße Verfahren weist die folgenden Schritte auf:
a) Erfassen einer Umgebungstemperatur in einem das Heizkörperthermostat umgebenden Raums mittels ein oder mehrerer Sensoren, insbesondere mittels wenigstens eines Temperatursensors, des Heizkörperthermostats;
b) Erfassen einer Raumgeometrie und/oder von Lebewesen im Raum mittels einer Radareinheit des Heizkörperthermostats;
c) Steuern eines mit dem Heizkörperventil wirkverbindbaren oder wirkverbundenen Stellantriebs des Heizkörperthermostats basierend auf den erfassten Daten zur Umgebungstemperatur, Raumgeometrie und/oder Präsenz von Lebewesen im Raum und/oder basierend auf Eingabedaten eines Nutzers.

Das erfindungsgemäße Verfahren kann zusätzlich den Schritt des Erzeugens von elektrischer Energie innerhalb des Heizkörperthermostats durch eine Einrichtung zur Nutzung der Temperaturdifferenz zwischen dem Wärmemedium und der Umgebung umfassen, um die Energieversorgung des Heizkörperthermostats, insbesondere der Radareinheit, zu unterstützen oder aufrechtzuerhalten.

Das Heizkörperthermostat kann ein computerlesbares Speichermedium aufweisen, das Befehle umfasst, die bei der Ausführung durch den Prozessor der Leiterplatte das Heizkörperthermostat veranlassen, das zuvor beschriebene Verfahren durchzuführen.

Das erfindungsgemäße Verfahren kann zusätzlich den Schritt des Austauschs von erfassten Daten zur Umgebungstemperatur, Raumgeometrie und/oder Präsenz von Lebewesen im Raum und/oder den Austausch von Eingabedaten eines Nutzers zwischen zwei Heizkörperthermostaten eines Heizungssystems mittels einer Funkverbindung umfassen, um die Temperaturverteilung innerhalb eines Raumes zu steuern.

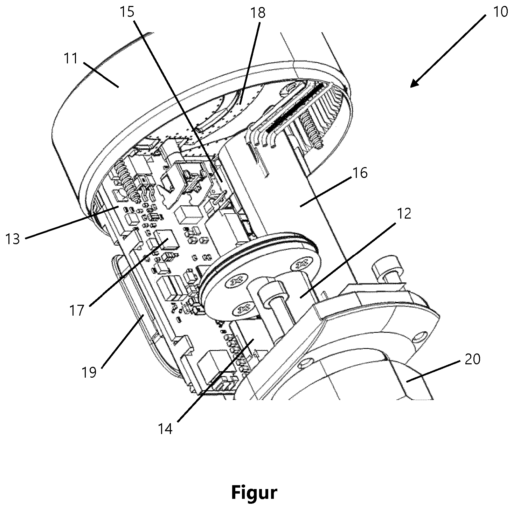

Die Erfindung wird im Folgenden anhand eines Ausführungsbeispiels unter Bezugnahme auf die beigefügte, schematische Zeichnung näher erläutert. Darin zeigt die einzige Figur eine perspektivische Darstellung eines Innenlebens eines erfindungsgemäßen Heizkörperthermostats nach einem bevorzugten Ausführungsbeispiel.

Das in der Figur dargestellte Heizkörperthermostat 10 umfasst ein Gehäuse 11. Das Gehäuse 11 weist zwei Gehäuseteile auf, wobei ein ventilnahes Gehäuseteil in der Zeichnung nicht dargestellt ist. Lediglich ein peripherer Gehäuseteil, der als Drehrad ausgebildet ist und es einem Nutzer ermöglicht, Nutzereingabedaten zu erzeugen, ist in der Zeichnung erkennbar. Innerhalb des Gehäuses 11 sind die elektronischen Komponenten des Heizkörperthermostats 10 angeordnet. Insbesondere ist eine Leiterplatte 13 vorgesehen, die mehrere elektronische Bauteile trägt. Innerhalb des Gehäuses 11 ist ferner ein Stellantrieb 12 angeordnet, der mit einem Heizkörperventil verbindbar ist, um die Ventilstellung zu verändern.

Die Leiterplatte 13 trägt insbesondere einen Prozessor 14, der als Mikrocontroller ausgebildet sein kann. Ferner weist die Leiterplatte 13 Anschlüsse für einen oder mehrere Temperatursensoren (nicht dargestellt) auf. Bevorzugt ist es, wenn zwei Temperatursensoren mit der Leiterplatte 13 signalverbunden sind. Auf der Leiterplatte 13 ist außerdem eine Radareinheit 15 angeordnet, die eine Sende- und Empfangseinheit sowie eine Radarantenne aufweist. Die Radarantenne kann als gerichtete Radarantenne ausgebildet sein.

Wie in der Figur außerdem erkennbar ist, ist innerhalb des Gehäuses ein Energiepufferspeicher 16, vorzugsweise in Form einer wiederaufladbaren Batterie angeordnet. Insbesondere kann hier eine Lithium-Ionen-Batterie, vorzugsweise eine 18650-Zelle oder eine 14500-Zelle, vorgesehen sein.

Die Leiterplatte 13 trägt ferner ein Funkmodul 17, das eine Funkantenne 18 umfasst. Konkret ist das Funkmodul 17 durch ein Sende- und Empfangsmodul und die Funkantenne 18 gebildet. Das Sende- und Empfangsmodul und die Funkantenne 18 können räumlich voneinander beabstandet angeordnet sein. Die Funkantenne 18 ist insbesondere im peripheren Gehäuseteil 11 platziert. Konkret kann die Funkantenne auf einer weiteren Leiterplatte angeordnet sein. Die weiter Leiterplatte kann senkrecht auf der Leiterplatte 13 montiert sein.

Generell ist es möglich, eine oder mehrere weitere Leiterplatten vorzusehen und die elektronischen Bauteile auf unterschiedliche Leiterplatten zu verteilen. Eine weitere Leiterplatte kann beispielsweise eine zusätzliche Radareinheit 15 aufzunehmen. Wenn die weitere Leiterplatte in einem Winkel, insbesondere rechtwinklig zur Leiterplatte 13 ausgerichtet ist, kann so ein weiteres Radarfeld mit einer alternativen Radar-Signalrichtung erzeugt werden.

Die Leiterplatte 13 umfasst eine Innenseite, die im Wesentlichen in das Innere des Gehäuses 11 ausgerichtet ist. Insbesondere ist die Innenseite zum Stellantrieb 12 hin ausgerichtet. Auf der Innenseite der Leiterplatte 13 sind die meisten elektronischen Bauteile, insbesondere Prozessoren, Sende- und Empfangsmodule, Kondensatoren sowie elektrische Widerstände angeordnet. Die Leiterplatte 13 umfasst auch eine Außenseite, die unmittelbar zum Gehäuse ausgerichtet ist. Auf der Außenseite der Leiterplatte 13 ist ein Anzeigeelement 19 befestigt. Das Anzeigeelement 19 kann insbesondere als ePaper-Display ausgebildet sein. Das Anzeigeelement 19 kann einen weiteren integrierten Energiepufferspeicher, insbesondere eine weitere wiederaufladbare Batterie umfassen. Außerdem kann ein weiterer Mikrocontroller zur Steuerung des ePaper-Displays in das Anzeigeelement 19 integriert sein. Der hier nicht dargestellte, ventilnahe Gehäuseteil kann im Bereich des Anzeigeelements 19 ein transparentes Fenster aufweisen, so dass das Anzeigeelement 19 von außen sichtbar ist.

Zur Verbindung des Heizkörperthermostats 10 mit einem Heizkörperventil ist bei dem hier dargestellten Ausführungsbeispiel eine Schraubenmutter 20 vorgesehen. Damit ist das hier dargestellte Heizkörperthermostat 10 als Nachrüstlösung für Heizkörperventile geeignet, die ein Gewinde zur Verbindung mit Heizkörperthermostaten 10 umfassen. Alternative Heizkörperventile, die beispielsweise eine Klick- oder Schnappverbindung bereitstellen, können mit dem Heizkörperthermostat 10 ausgerüstet werden, wenn anstelle der Schraubenmutter 20 eine entsprechende Klick- oder Schnappverbindungsschnittstelle vorgesehen ist. Alternative Ausführungsbeispiele des Heizkörperthermostats 10 umfassen folglich derartige alternative Schnittstellen, beispielsweise Klickverbinder oder Schnappverbinder.

Das Heizkörperthermostat 10 dient insbesondere zum Regeln der Temperatur eines Heizkörpers zur Beeinflussung der Raumtemperatur eines Raumes, in welchem der Heizkörper installiert ist. Dazu wirkt das Heizkörperthermostat mittels des Stellantriebs 12 auf das Heizkörperventil des Heizkörpers ein. Durch das Heizkörperventil fließt ein Wärmemedium, vorzugsweise in Form einer Heizkörperflüssigkeit. Die Durchflussrate der Heizkörperflüssigkeit wird durch die Stellung des Heizkörperventils beeinflusst. Der Stellantrieb 12 verändert die Stellung des Heizkörperventils, um so gezielt den Durchfluss der Heizkörperflüssigkeit zu steuern. So erfolgt die Temperatursteuerung.

Die Eingangsdaten für die im Heizkörperthermostat vorgenommene Regelung umfassen neben den Nutzereingangsdaten Temperaturdaten und zusätzliche Umgebungsdaten. Die Temperaturdaten können insbesondere Daten über die Raumtemperatur sein, die über den wenigstens einen Temperatursensor ermittelt werden. Zusätzlich kann die Temperatur des Gehäuses 11 und/oder der Heizkörperflüssigkeit gemessen werden, um eine Regelung der Raumtemperatur zu verbessern. Bei dem hier dargestellten Heizkörperthermostat 10 ist außerdem die Radareinheit 15 in Verwendung, um Eingangsdaten für die Raumtemperaturregelung zu generieren. Die Radareinheit 15 kann insbesondere die Geometrie des umgebenden Raumes ermitteln und so die vom Temperatursensor unmittelbar in der Nähe des Heizkörpers erfasste Temperatur zu kalibrieren. Die Ermittlung der Raumgeometrie kann bei größeren Räumen auch anhand der Radardaten von mehreren Heizkörperthermostaten ermittelt werden, die sich an verschiedenen Heizkörpern desselben Raumes befinden. Dazu können die entsprechenden Radardaten über das Funkmodul untereinander drahtlos ausgetauscht werden. Dazu können die Funkmodule direkt miteinander kommunizieren. Bevorzugt ist jedoch die Nutzung eines Funknetzwerks mit einem zentralen Gateway, wobei jedes Funkmodul mit dem Gateway signalverbunden ist. Das Gateway kann eine Netzwerkschnittstelle zur Verbindung mit dem Internet aufweisen, um so Daten mit einem Cloudservice auszutauschen.

Neben der Kalibrierung der Stellung des Stellantriebs 12 anhand der Raumgeometrie können die Radardaten, die durch die Radareinheit 15 ermittelt werden, auch genutzt werden, um die Anwesenheit von Lebewesen in einem Raum zu erkennen. Bei Anwesenheit von Lebewesen, insbesondere von menschlichen Personen, kann beispielsweise die Zieltemperatur erhöht werden, um für die Personen im Raum ein angenehmes Wohlfühlklima zu generieren. Bei Abwesenheit von Personen kann hingegen die Raumtemperatur reduziert werden, um so zu einer Energieeinsparung beizutragen. Die Radareinheit 15 kann so konfiguriert sein, dass sie die Anwesenheit von Personen von der Anwesenheit von beispielsweise Haustieren unterscheiden kann. So kann auf eine Anhebung der Raumtemperatur bzw. Zieltemperatur verzichtet werden, wenn sich lediglich Haustiere im Raum befinden.

Um die Anwesenheit von Lebewesen zuverlässig zu erkennen, ist vorteilhaft vorgesehen, dass die Radareinheit ein Radarsignal mit einer Frequenz zwischen 20 GHz und 60 GHz, vorzugsweise 24 GHz, nutzt. Diese für Radar relativ niedrigen Frequenzen stellen sicher, dass Mobiliar von den Radarsignalen gut durchdrungen werden kann. So können auch Lebewesen, die sich beispielsweise hinter einem Sofa befinden, gut erkannt werden. Dies ist insbesondere deshalb relevant, weil Heizkörper oftmals durch Mobiliar verdeckt werden. Sofas oder andere Möbelstücke werden erfahrungsgemäß oft unmittelbar vor einem Heizkörper platziert. Dabei kann die Radareinheit 15 konfiguriert sein, um das Mobiliar einerseits zu durchdringen, gleichzeitig jedoch auch die Anwesenheit des Mobiliars und die Distanz zum Heizkörper bzw. Heizkörperthermostat zu erfassen. So kann mittels des Prozessors 14 eine entsprechende Regelung vorgenommen werden, die berücksichtigt, dass der Heizkörper selbst von einem Möbelstück zumindest teilweise verdeckt ist.

Das Heizkörperthermostat 10 bietet durch das Zusammenspiel von Temperatursensor und Radareinheit 15 so eine besonders präzise Regelung der Raumtemperatur, insbesondere auch in Bestandsgebäuden.

Besonders vorteilhaft ist es bei dem hier beschriebenen Heizkörperthermostat 10, dass die Energieversorgung des Heizkörperthermostats 10 nicht ausschließlich über den Energiepufferspeicher 16 erfolgt. Vielmehr dient der Energiepufferspeicher 16 lediglich als Zwischenspeicher für Energie, die im Heizkörperthermostat 10 selbst erzeugt wird. Dazu nutzt das Heizkörperthermostat 10 die Temperaturdifferenz zwischen dem Wärmemedium, insbesondere der Heizkörperflüssigkeit, im Heizkörper und der Umgebungstemperatur. Das Gehäuse 11 ist daher vorzugsweise aus einem gut temperaturleitenden Material, insbesondere aus Aluminium gebildet. Über eine Einrichtung zur Erzeugung von elektrischer Energie aus der Temperaturdifferenz zwischen dem Wärmemedium und der Umgebung wird elektrische Energie erzeugt und im Energiepufferspeicher 16 zwischengespeichert. Die elektronischen Komponenten des Heizkörperthermostats 10 werden dann über den Energiepufferspeicher 16 mit elektrischer Energie versorgt. Das Nachladen des Energiepufferspeichers 16 erfolgt, vorzugsweise ausschließlich, über die Einrichtung zur Erzeugung von elektrischer Energie aus der Temperaturdifferenz zwischen dem Wärmemedium und der Umgebung (thermisches Energy Harvesting). Das Heizkörperthermostat 10 ist so langfristig autark einsetzbar. Es eignet sich daher besonders gut für die Nachrüstung von Bestandsgebäuden, insbesondere im Mietwohnungsbau.

### Bezugszeichenliste

- 10: Heizkörperthermostat
- 11: Gehäuse
- 12: Stellantrieb
- 13: Leiterplatte
- 14: Prozessor
- 15: Radareinheit
- 16: Energiepufferspeicher
- 17: Funkmodul
- 18: Funkantenne
- 19: Anzeigeelement
- 20: Schraubenmutter

## Patentansprüche

1. Heizkörperthermostat (10) für ein mit einem Wärmemedium durchströmtes Heizkörperventil, mit einem Gehäuse (11), in welchem ein Stellantrieb (12) zum Öffnen und Schließen des Heizkörperventils und eine Leiterplatte (13) angeordnet sind, wobei die Leiterplatte (13) einen Prozessor (14) zur Steuerung des Stellantriebs (12), wenigstens einen Temperatursensor zur Erfassung einer Umgebungstemperatur und eine Radareinheit (15) zur Erfassung einer Raumgeometrie und/oder zur Erfassung von Lebewesen in einem Raum umfasst.

2. Heizkörperthermostat (10) nach Anspruch 1
**dadurch gekennzeichnet, dass**
innerhalb des Gehäuses (11) eine Einrichtung zur Erzeugung von elektrischer Energie aus einer Temperaturdifferenz zwischen dem Wärmemedium und der Umgebung angeordnet ist.

3. Heizkörperthermostat (10) nach Anspruch 1 oder 2
**dadurch gekennzeichnet, dass**
das Gehäuse eine Einrichtung zur Erzeugung von elektrischer Energie aus Lichtstrahlung, insbesondere ein Photovoltaik-Modul, trägt.

4. Heizkörperthermostat (10) nach einem der vorhergehenden Ansprüche
**dadurch gekennzeichnet, dass**
das Gehäuse (11) ein Metall, insbesondere eine Aluminiumlegierung, umfasst oder daraus besteht.

5. Heizkörperthermostat (10) nach einem der vorhergehenden Ansprüche
**dadurch gekennzeichnet, dass**
die Radareinheit (15) einen Radarprozessor und wenigstens eine Sende- und/oder Empfangseinrichtung, insbesondere wenigstens eine Radarantenne, aufweist und/oder dass die Radareinheit (15), insbesondere der Radarprozessor, auf der Leiterplatte angeordnet ist
und/oder dass die Radareinheit (15) zur Erzeugung gepulster Radarsignale, insbesondere gepulster Doppler-Radarsignale, angepasst ist.

6. Heizkörperthermostat (10) nach einem der vorhergehenden Ansprüche
**dadurch gekennzeichnet, dass**
die Radareinheit (15) angepasst ist, um ein Radarsignal mit einer Frequenz von größer als 20 GHz, insbesondere in einem Frequenzband zwischen 22 GHz und 26 GHz, insbesondere zwischen 23 GHz und 25 GHz, insbesondere zwischen 23,5 GHz und 24,5 GHz, vorzugsweise 24 GHz, zu erzeugen.

7. Heizkörperthermostat (10) nach Anspruch 5 oder 6
**dadurch gekennzeichnet, dass**
die Sende- und/oder Empfangseinheit so angepasst ist, dass ein gerichtetes Radarsignal erzeugbar ist.

8. Heizkörperthermostat (10) nach Anspruch 7
**dadurch gekennzeichnet, dass**
das Radarsignal zur Abtastung der Umgebung räumlich steuerbar ist.

9. Heizkörperthermostat (10) nach einem der vorhergehenden Ansprüche
**dadurch gekennzeichnet, dass**
der Prozessor (14) konfiguriert ist, um anhand von Daten der Radareinheit (15) Raumdaten, insbesondere eine Größe und/oder Form, eines das Heizkörperthermostat (10) umgebenden Raums zu ermitteln, insbesondere wobei der Prozessor (14) konfiguriert ist, um die mittels des Temperatursensors ermittelte Umgebungstemperatur anhand der Raumdaten zu kalibrieren.

10. Heizkörperthermostat (10) nach einem der Ansprüche 2 bis 9
**dadurch gekennzeichnet, dass**
die Einrichtung zur Erzeugung elektrischer Energie mit dem Stellantrieb (12) und/oder der Leiterplatte (13) elektrisch gekoppelt ist und/oder dass die Einrichtung zur Erzeugung elektrischer Energie einen Energiepufferspeicher (16), insbesondere eine wiederaufladbare Batterie, aufweist.

11. Heizkörperthermostat (10) nach einem der vorhergehenden Ansprüche
**dadurch gekennzeichnet, dass**
die Leiterplatte (13) ein Funkmodul (17), insbesondere ein LoRaWAN-Modul, trägt und/oder dass die Leiterplatte (13) ein Anzeigeelement (19), insbesondere ein ePaper-Display, trägt.

12. Heizkörperthermostat (10) nach einem der vorhergehenden Ansprüche
**dadurch gekennzeichnet, dass**
das Gehäuse (11) eine Schnittstelle, insbesondere eine Schraubenmutter (20) und/oder einen Klickverbinder, zur lösbaren Verbindung des Heizkörperthermostats (10) mit einem Heizkörperventil aufweist.

13. Heizungssystem eines Mehrparteienhauses mit mehreren Heizkörpern, die jeweils ein Heizkörperventil aufweisen, wobei an wenigstens zwei Heizkörperventilen jeweils ein Heizkörperthermostat (10) nach einem der vorhergehenden Ansprüche mechanisch so befestigt ist, dass das Heizkörperventil über das Heizkörperthermostat (10), insbesondere direkt, steuerbar ist.

14. Verfahren zur Steuerung eines mit einem Wärmemedium durchströmten Heizkörperventils mittels eines Heizkörperthermostats (10), insbesondere eines Heizkörperthermostats (10) nach einem der vorhergehenden Ansprüche, wobei das Verfahren die folgende Schritte umfasst:
a) Erfassen einer Umgebungstemperatur in einem das Heizkörperthermostat (10) umgebenden Raums mittels ein oder mehrerer Sensoren, insbesondere mittels wenigstens eines Temperatursensors, des Heizkörperthermostats (10);
b) Erfassen einer Raumgeometrie und/oder von Lebewesen im Raum mittels einer Radareinheit (15) des Heizkörperthermostats (10);
c) Steuern eines mit dem Heizkörperventil wirkverbindbaren oder wirkverbundenen Stellantriebs (12) des Heizkörperthermostats (10) basierend auf den erfassten Daten zur Umgebungstemperatur, Raumgeometrie und/oder Präsenz von Lebewesen im Raum und/oder basierend auf Eingabedaten eines Nutzers.

15. Verfahren nach Anspruch 14, wobei das Verfahren ferner folgenden Schritt aufweist:
d) Erzeugen von elektrischer Energie innerhalb des Heizkörperthermostats (10) durch eine Einrichtung zur Nutzung der Temperaturdifferenz zwischen dem Wärmemedium und der Umgebung, um die Energieversorgung des Heizkörperthermostats (10), insbesondere der Radareinheit (15), zu unterstützen oder aufrechtzuerhalten.
